# EUROPÄISCHE PATENTSCHRIFT

(11) **EP 4 605 287 B1**
(45) Veröffentlichungstag und Bekanntmachung des Hinweises auf die Patenterteilung: **16.09.2026**
(21) Anmeldenummer: 23789946.3
(22) Anmeldetag: 12.10.2023
(51) Int. Cl.: B60T 17/18, B60T 17/22

(54) **VERFAHREN UND VORRICHTUNG ZUM BETREIBEN EINES FAHRZEUGS MIT EINER PEDALEINRICHTUNG**
METHOD AND DEVICE FOR OPERATING A VEHICLE USING A PEDAL DEVICE
PROCÉDÉ ET DISPOSITIF POUR FAIRE FONCTIONNER UN VÉHICULE AU MOYEN D'UN DISPOSITIF DE PÉDALE

(30) Priorität: 20.10.2022 DE 102022211131
(43) Veröffentlichungstag der Anmeldung: 27.08.2025
(73) Patentinhaber: Robert Bosch GmbH, 70442 Stuttgart (DE)
(72) Erfinder: HAAG, Florian, 74248 Ellhofen (DE); LOEFFELMANN, Nikolas, 69234 Dielheim (DE); MARQUART, Martin, 78564 Reichenbach (DE)
(86) Internationale Anmeldenummer: PCT/EP2023/078363
(87) Internationale Veröffentlichungsnummer: WO 2024/083633

(56) Entgegenhaltungen:
- DE-A1- 102005 008 694
- DE-A1- 102007 035 326
- DE-A1- 102007 036 259
- DE-A1- 102008 003 801
- DE-A1- 102011 016 125
- DE-A1- 102019 113 969
- DE-A1- 19 510 525
- US-A1- 2018 215 368
- US-A1- 2022 169 222

## Beschreibung

Die Erfindung betrifft ein Verfahren zum Betreiben eines Fahrzeugs, insbesondere Kraftfahrzeug, mit einer Pedaleinrichtung, insbesondere Bremspedaleinrichtung, wobei die Pedaleinrichtung wenigstens ein verlagerbares Pedal und mindestens zwei Sensoren zum Erfassen einer Betätigung des Pedals aufweist, wobei ein Fahrerwunsch in Abhängigkeit von einem Ausgangssignal zumindest einer der Sensoren bestimmt wird, wobei zum Erfassen einer Fehlfunktion der Pedaleinrichtung die Ausgangssignale beider Sensoren miteinander verglichen werden und das bei Erfassen einer Fehlfunktion das Fahrzeug in einen sicheren Zustand verbracht wird.

Weiterhin betrifft die Erfindung ein Computerprogramm sowie ein Computerprodukt zur Durchführung des obengenannten Verfahrens.

Ferner betrifft die Erfindung eine Vorrichtung zum Betreiben eines Fahrzeugs, die zur Ausführung des obengenannten Verfahrens ausgebildet ist.

### Stand der Technik

Verfahren der eingangs genannten Art sind aus dem Stand der Technik bekannt. Mit der zunehmenden Elektrifizierung und Digitalisierung von Fahrzeugtechnik ist auch das Interesse an sogenannten Break- oder Steer-By-Wire-Systemen gestiegen, bei welchen eine mechanische Kopplung zwischen Bremspedal und Bremssystem oder Gaspedal und Verbrennungsmotor aufgehoben wird. Stattdessen werden Fahrerwünsche durch das sensorische Erfassen insbesondere von Pedalpositionen ermittelt und elektrisch beziehungsweise signaltechnisch einem ansteuerbaren Aktor/Aktuator zur Umsetzung des Fahrerwunsches übermittelt. Aufgrund des Wegfallens der bisher üblichen mechanischen Kopplung werden redundante Sensoriken eingesetzt, um auch bei Auftreten von Fehlfunktionen einen sicheren Betrieb des Kraftfahrzeugs weiter gewährleisten zu können. So ist es bekannt, eine Pedalbetätigung mit zwei Sensoren zu erfassen, um bei Ausfall eines der Sensoren das Fahrzeug mit dem verbleibenden Sensor weiterbetreiben zu können. Auch ist es bekannt, einzelne Sensoren mit unterschiedlichen Ausgangskanälen zu versehen, wobei die Ausgangssignale der beiden Kanäle miteinander verglichen werden, um Fehler zu erkennen. Weiterhin sind Verfahren bekannt, bei welchen die Daten mehrerer Sensoren der Pedaleinrichtung miteinander verglichen werden, um eine Fehlfunktion festzustellen. Wird eine Fehlfunktion erkannt, so wird das Fahrzeug in einen sicheren Zustand verbracht, in dem beispielsweise die Pedaleinrichtung oder ein Steuergerät der Pedaleinrichtung in einen Notbetrieb geschaltet werden.

Weitere Verfahren zum Betreiben eines Fahrzeugs sind aus den Offenlegungsschriften US 2022/169222 A1, DE 10 2011 016125 A1 und DE 10 2008 003 801 A1 bekannt.

### Offenbarung der Erfindung

Durch die vorliegende Erfindung wird erreicht, dass eine Fehlfunktion der Pedaleinrichtung sicher erkannt wird, und dass ermittelt wird, welcher Sensor für die Fehlfunktion verantwortlich ist oder welcher Sensor ohne Fehlfunktion ist, so dass das Fahrzeug mit Hilfe der Sensordaten des fehlerfreien Sensors weiterbetrieben werden kann. Hierzu ist es erfindungsgemäß vorgesehen, dass nach Erreichen des sicheren Zustands eine Anweisung zur Durchführung eines Funktionstests der Pedaleinrichtung an einen Fahrer des Fahrzeugs ausgegeben wird. Der Fahrer erhält somit eine Anweisung, nachdem der sichere Zustand des Kraftfahrzeugs erreicht wurde, die Pedaleinrichtung zu betätigen, um deren Funktionsfähigkeit zu prüfen. Vorzugsweise wird die Anweisung visuell und/oder akustisch ausgegeben.

Vorzugsweise wird zum Erfassen der Fehlfunktion das jeweilige Ausgangssignal mit zumindest einer Sollkennlinie verglichen. Die Kennlinie ergibt sich beispielsweise aus vorherigen Versuchen, bei welchen die Funktionsfähigkeit der Pedaleinrichtung, insbesondere der eingesetzten Sensoren, bekannt war. Optional oder zusätzlich kann die Sollkennlinie auch berechnet werden.

Weiterhin ist erfindungsgemäß vorgesehen, dass durch einen der Sensoren eine Betätigungskraft und durch einen anderen der Sensoren ein Betätigungsweg des verlagerbaren Pedals erfasst wird. Somit wird durch einen Sensor eine Kraft und durch den anderen Sensor ein Weg ermittelt, wobei Kraft und Weg vorzugsweise mit einer Kraft-Sollkennlinie beziehungsweise Soll-Wegkennlinie und/oder miteinander verglichen werden, um die Funktionsfähigkeit der Pedaleinrichtung zu ermitteln.

Gemäß einer bevorzugten Ausführung der Erfindung wird für den sicheren Zustand das Fahrzeug in den Stillstand verbracht oder die Pedaleinrichtung in einen Leerlaufbetrieb geschaltet. Im Stillstand kann sich dann eine Pedalbetätigung durch den Fahrer zur Durchführung des Funktionstests nicht auf den Fahrbetrieb auswirken. Für das Erreichen des Stillstands wird beispielsweise durch eine Sicherheitsmaßnahme ein Verzögerungsmoment beziehungsweise eine Bremskraft unabhängig von der tatsächlichen Pedalbetätigung vorgegeben und solange aufrechterhalten, bis das Fahrzeug den Stillstand erreicht hat. Im Leerlaufbetrieb der Pedaleinrichtung wird diese insbesondere von einem Bremseinrichtungen, insbesondere Radreibbremseinrichtungen, aufweisenden Bremskreis des Fahrzeugs mechanisch, fluidtechnisch und/oder signaltechnisch getrennt, so dass eine Pedalbetätigung nicht zu einem Bremskraftaufbau oder Druckaufbau im Bremskreis führt. Das Pedal wird im Leerlaufbetrieb also "ins Leere" gedrückt.

Erfindungsgemäß wird der Fahrer zur Durchführung des Funktionstestsdazu aufgefordert, das Pedal so fest und weit wie möglich zu drücken. Dadurch wird erreicht, dass das Pedal zum einen maximal weit gedrückt wird und zum anderen es die maximal erreichbare Betätigungskraft erhält. So kann durch eine Auswertung der Ausgangssignale der Sensoren sicher festgestellt werden, welcher von beiden Sensoren fehlerhaft ist und welcher funktioniert.

Vorzugsweise werden daher die Ausgangssignale der Sensoren während des Funktionstests mit erwarteten Ausgangssignalen verglichen, um einen fehlerhaften Sensor der Sensoren zu ermitteln. Weicht eines der Ausgangssignale insbesondere über einen vorgegebenen Toleranzwert hinaus von dem erwarteten Ausgangssignal ab, wird festgestellt, dass der betroffene Sensor fehlerhaft arbeitet. Da sich das Fahrzeug dabei im sicheren Fahrzustand, insbesondere im Stillstand, befindet, hat dies keine negative Auswirkung auf den Fahrbetrieb.

Vorzugsweise wird nach Erfassen eines fehlerhaften Sensors der fehlerfreie Sensor für die Bestimmung des Fahrerwunsches gewählt und der sichere Zustand des Fahrzeugs gelöst. Das Fahrzeug kann somit anschließend mit dem als fehlerfrei erkannten Sensor weiterbetrieben werden, sodass das Fahrzeug eigenständig das gewünschte Ziel oder eine nächstgelegene Werkstatt erreichen kann.

Das erfindungsgemäße Computerprogramm zeichnet sich dadurch aus, dass es die erfindungsgemäßen Verfahrensschritte ausführt, wenn es auf einem Computer ausgeführt wird.

Das erfindungsgemäße Computerprogrammprodukt zeichnet sich durch einen Datenträger auf, auf welchem das erfindungsgemäße Computerprogramm gespeichert ist.

Die erfindungsgemäße Vorrichtung mit den Merkmalen des Anspruchs 9 zeichnet sich durch ein Steuergerät aus, das speziell dazu ausgebildet ist, das erfindungsgemäße Verfahren oder das erfindungsgemäße Computerprogramm auszuführen. Es ergeben sich hierdurch die bereits genannten Vorteile. Insbesondere weist die Vorrichtung einen Speicher auf, in welchem das Computerprogramm hinterlegt ist, sowie einen Prozessor, der das Computerprogramm ausführt.

Im Folgenden soll die Erfindung anhand der Zeichnung näher erläutert werden. Dazu zeigen
- Figur 1: ein Bremssystem eines Kraftfahrzeugs in einer vereinfachten Darstellung
- Figur 2: ein Diagramm zur Erläuterung eines Prüfverfahrens und
- Figur 3: ein Ausführungsbeispiel eines vorteilhaften Verfahrens zum Betreiben eines Kraftfahrzeugs.

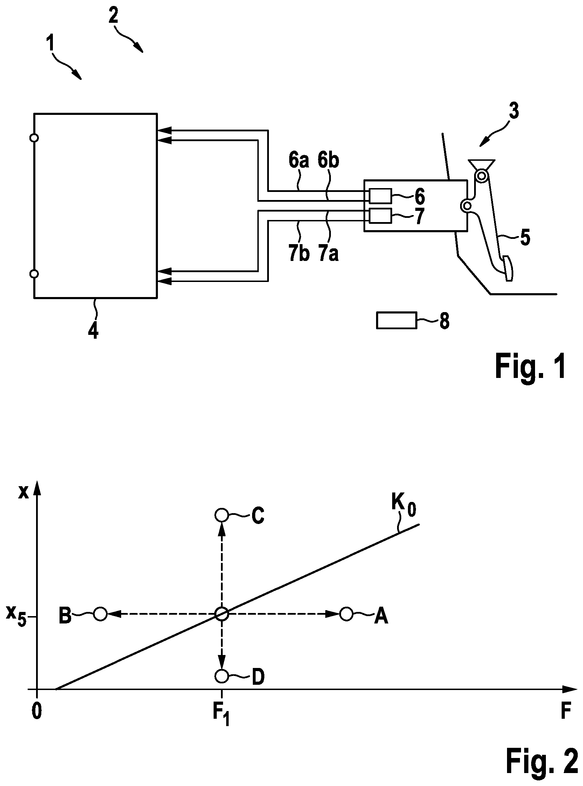

Figur 1 zeigt in einer vereinfachten Darstellung ein Bremssystem 1 eines hier nicht näher dargestellten Kraftfahrzeugs 2. Das Bremssystem 1 weist eine Pedaleinrichtung 3 auf, die zumindest signaltechnisch, mit einem Bremssystem 4 des Kraftfahrzeugs 2 verbunden ist. Das Bremssystem 4 umfasst ein oder mehrere ansteuerbare Bremseinrichtungen, insbesondere Hydraulikreibbremseinrichtungen, sowie wenigstens einen ansteuerbaren Aktuator auf, der dazu ausgebildet ist, eine der Reibbremseinrichtungen mit einer Betätigungskraft, beispielsweise hydraulisch, zu beaufschlagen, um das Kraftfahrzeug 2 zu verzögern. Das Bremssystem 1 ist dabei als sogenanntes Break-By-Wire-System, also als mechanisch entkoppeltes Bremssystem, ausgebildet, sodass die Bremspedaleinrichtung 3 keine Bremskraft mechanisch auf die Reibbremseinrichtungen ausüben kann.

Die Pedaleinrichtung 3 weist ein von einem Fahrer betätigbares Pedal 5 auf, das insbesondere verschwenkbar gelagert ist. Dem Pedal 5 sind ein erster Sensor 6, der als Pedalweg- oder Pedalpositionssensor ausgebildet ist, sowie ein Sensor 7, der als Betätigungskraftsensor ausgebildet ist, zugeordnet. Wird das Pedal 5 von einem Fahrer betätigt, also aus einer Ruheposition heraus verschwenkt beziehungsweise verlagert, wird die Bewegung oder die aktuelle Position des Pedals 5 durch den Sensor 6 und die auf das Pedal ausgeübte Betätigungskraft durch den Sensor 7 erfasst. Beide Sensoren 6, 7 sind zweikanalig ausgebildet, sodass sie durch jeweils zwei Ausgangskanäle 6a, 6b beziehungsweise 7a, 7b signaltechnisch, insbesondere elektrisch, mit dem Bremssystem 4 verbunden sind.

Figur 2 zeigt in einem Diagramm beispielhaft aufgetragen die Pedalposition x über die Betätigungskraft F, die von den Sensoren 6 und 7 erfassbar sind. Eine durchgezogene Sollkennlinie K₀ zeigt an, wie sich das Verhältnis zwischen Betätigungskraft zu Betätigungsweg verhalten sollte, wenn die Pedaleinrichtung 3 und insbesondere Sensoren 6, 7 fehlerfrei arbeiten. So ist bei einer beispielhaften Betätigungskraft F₁ zu erwarten, dass das Fahrpedal 5 um einen Weg x₅ verlagert wurde. Weicht das tatsächliche Verhältnis von Position x Zugkraft F von der Sollkennlinie insbesondere über ein vorgebbares Toleranzmaß hinaus ab, wird erkannt, dass ein Fehler vorliegt. Hierzu ist der Pedaleinrichtung 3 ein Steuergerät 8 zugeordnet, das beispielsweise auch ein Steuergerät des Bremssystems 4 sein kann. Wird ein solcher Fehler erkannt, beispielsweise weil die Betätigungskraft F unerwartet hoch ist (A) oder unerwartet niedrig (B) oder weil der Betätigungsweg x für die aufgewandte Kraft unerwartet hoch ist (C) oder unerwartet niedrig (D), wie in Figur 2 beispielhaft eingetragen, wird das Fahrzeug durch das Steuergerät 8 in einen sicheren Zustand als Sicherheitsmaßnahme gesetzt. Gemäß dem vorliegenden Ausführungsbeispiel wird dazu das Bremssystem 4 dazu angesteuert, das Kraftfahrzeug 2 in den Stillstand zu verzögern.

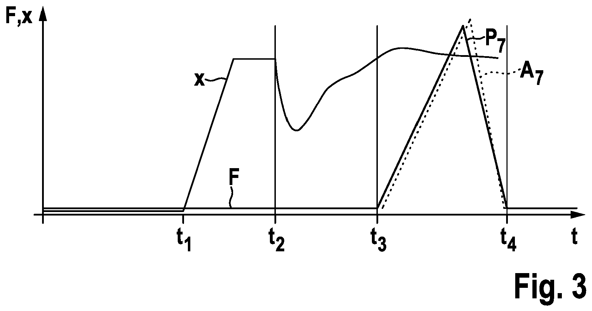

Figur 3 zeigt in einem weiteren Diagramm einen beispielhaften Verlauf des Verfahrens. Das im Folgenden beschriebene Verfahren wird beispielsweise in Form eines Computerprogramms in einem nicht flüchtigen Speicher des Steuergeräts 8 des Fahrzeugs hinterlegt. In dem Diagramm sind die Zeit t aufgetragen über die Kraft F sowie der Betätigungsweg x. Ab einem Zeitpunkt t₁ beginnt der Sensor 6 ein abweichendes Ausgangssignal auszugeben, das mit der Zeit zunimmt. Weil der Sensor 7 kein damit korrelierendes Signal ausgibt, wird zu einem Zeitpunkt t₂ festgestellt, dass ein Sensorfehler vorliegen muss. Infolgedessen wird das Kraftfahrzeug 2 in den Stillstand abgebremst, wie zuvor beschrieben. Sobald sich das Kraftfahrzeug 2 im Stillstand befindet, beispielsweise zum Zeitpunkt t₃, wird dem Fahrer des Kraftfahrzeugs 1 durch das Steuergerät 8 eine Anweisung zum Durchführen einer Funktionsprüfung ausgegeben. Die Anweisung erfolgt insbesondere akustisch und/oder visuell. So wird beispielsweise akustisch darauf hingewiesen, dass der Fahrer seine Aufmerksamkeit, beispielsweise auf das Display des Kraftfahrzeugs lenken soll, wo ihm dann Anweisungsschritte dargestellt werden. Dabei ist vorgesehen, dass der Fahrer dazu aufgefordert wird, das Pedal 5 insbesondere aus der Ausgangsposition heraus, mit maximaler Kraft maximal weit durchzudrücken. Bis zum Erreichen des maximalen Wegs und der maximalen Kraft zum Zeitpunkt t₄ werden die Ausgangssignale der Sensoren 6, 7 überwacht. Vorliegend, aufgrund der Fehlfunktion des Sensors 6, wird nun das Ausgangssignal A₇ des Sensors 7 erfasst, das beispielsweise mit einer Sollkennlinie P₇ für das Ausgangssignal im Prüfschritt verglichen wird. Weicht das Ausgangssignal A₇ nicht über einen vorgegebenen Toleranzwert von der Sollkennlinie P₇ oder der Prüfkennlinie ab, so wird festgestellt, dass der Sensor 7 funktionsfähig ist. Anschließend wird der Fahrbetrieb des Kraftfahrzeugs 2 wieder freigegeben, wobei Bremsanforderungen dann nur noch in Abhängigkeit von dem von dem Sensor 7 bereitgestellten Ausgangssignal umgesetzt beziehungsweise berücksichtigt werden. Somit kann der Fahrer das Kraftfahrzeug 2 selbst weiterbewegen und sicher sein Ziel erreichen. Vorzugsweise wird der Fahrer außerdem darauf hingewiesen, eine Werkstatt anzufahren, in welcher die Fehlfunktion des Sensors 6 ausgetauscht werden kann.

## Patentansprüche

1. Verfahren zum Betreiben eines Fahrzeugs, insbesondere Kraftfahrzeug (2), mit einer Pedaleinrichtung (3) , insbesondere Bremspedaleinrichtung, wobei die Pedaleinrichtung (3) wenigstens ein verlagerbares Pedal (5) und mindestens zwei Sensoren (6, 7) zum Erfassen einer Betätigung des Pedals (5) aufweist, wobei durch einen der Sensoren (7) eine Betätigungskraft (F) und durch einen anderen der Sensoren (6) ein Betätigungsweg (x) des Pedals (5) erfasst wird, wobei ein Fahrerwunsch in Abhängigkeit von einem Ausgangssignal zumindest einer der Sensoren (6, 7) bestimmt wird, wobei zum Erfassen einer Fehlfunktion der Pedaleinrichtung (5) die Ausgangssignale beider Sensoren (6, 7) miteinander verglichen werden, und wobei bei Erfassen einer Fehlfunktion das Fahrzeug in einen sicheren Zustand verbracht wird, **dadurch gekennzeichnet, dass** nach Erreichen des sicheren Zustands eine Anweisung zur Durchführung eines Funktionstests der Pedaleinrichtung (3) an einen Fahrer des Fahrzeugs ausgegeben wird, wobei der Fahrer dazu aufgefordert wird, das Pedal (5) so fest und so weit wie möglich zu drücken.

2. Verfahren nach Anspruch 1, **dadurch gekennzeichnet, dass** zum Erfassen der Fehlfunktion das jeweilige Ausgangssignal eines Sensors (6,7) mit zumindest einer Sollkennlinie verglichen wird.

3. Verfahren nach einem der vorhergehenden Ansprüche, **dadurch gekennzeichnet, dass** eine Sicherheitsmaßnahme einen Notbetrieb der Pedaleinrichtung (5) aktiviert.

4. Verfahren nach einem der vorhergehenden Ansprüche, **dadurch gekennzeichnet, dass** für den sicheren Zustand das Fahrzeug in den Stillstand verbracht oder die Pedaleinrichtung in einen Leerlaufbetrieb geschaltet wird.

5. Verfahren nach einem der vorhergehenden Ansprüche, **dadurch gekennzeichnet, dass** Ausgangssignale der Sensoren (6, 7) während des Funktionstests mit erwarteten Ausgangssignalen verglichen werden, um einen fehlerhaften Sensor (6, 7) zu ermitteln.

6. Verfahren nach Anspruch 5, **dadurch gekennzeichnet, dass** nach Erfassen eines fehlerhaften Sensors (6, 7) der fehlerfreie Sensor (7, 6) für die Bestimmung des Fahrerwunsches gewählt und der sichere Zustand des Fahrzeugs gelöst wird.

7. Computerprogramm, das dazu eingerichtet ist, bei seiner Ausführung durch einen Computer ein Verfahren nach einem der Ansprüche 1 bis 6 auszuführen.

8. Computerprogrammprodukt mit einem computerlesbaren Medium, auf welchem ein Computerprogramm mit den Merkmalen des Anspruchs 7 gespeichert ist.

9. Vorrichtung zum Betreiben eines Fahrzeugs mit einer Pedaleinrichtung (3), mit einem Steuergerät (8), das speziell dazu hergerichtet ist, ein Verfahren mit einem der Ansprüche 1 bis 6 oder das Computerprogramm mit den Merkmalen des Anspruchs 7 auszuführen.

## Claims

1. Method for operating a vehicle, in particular a motor vehicle (2), with a pedal device (3), in particular a brake pedal device, wherein the pedal device (3) has at least one displaceable pedal (5) and at least two sensors (6, 7) for detecting actuation of the pedal (5), wherein an actuation force (F) is detected by one of the sensors (7) and an actuation travel (x) of the pedal (5) is detected by another of the sensors (6), wherein a driver's request is determined on the basis of an output signal from at least one of the sensors (6, 7), wherein, for detecting a malfunction of the pedal device (5), the output signals from both sensors (6, 7) are compared with each other, and wherein, when a malfunction is detected, the vehicle is brought into a safe state, **characterized in that**, after the safe state has been reached, an instruction to perform a functional test on the pedal device (3) is output to a driver of the vehicle, prompting the driver to press the pedal (5) as hard and as far as possible.

2. Method according to Claim 1, **characterized in that**, for detecting the malfunction, the respective output signal from a sensor (6, 7) is compared with at least one target characteristic curve.

3. Method according to one of the preceding claims, **characterized in that** a safety measure activates emergency operation of the pedal device (5).

4. Method according to one of the preceding claims, **characterized in that**, for the safe state, the vehicle is brought to a standstill or the pedal device is switched to an idling.

5. Method according to one of the preceding claims, **characterized in that** output signals from the sensors (6, 7) are compared with expected output signals during the functional test in order to identify a faulty sensor (6, 7).

6. Method according to Claim 5, **characterized in that**, after detecting a faulty sensor (6, 7), the fault-free sensor (7, 6) is selected for determining the driver's request and the safe state of the vehicle is released.

7. Computer program which is configured to carry out a method according to one of Claims 1 to 6 when executed by a computer.

8. Computer program product having a computer-readable medium on which a computer program having the features of Claim 7 is stored.

9. Apparatus for operating a vehicle with a pedal device (3), having a control unit (8) which is specifically configured to carry out a method with one of Claims 1 to 6 or to execute the computer program with the features of Claim 7.

## Revendications

1. Procédé pour faire fonctionner un véhicule, en particulier un véhicule à moteur (2), équipé d'un dispositif de pédale (3), en particulier d'un dispositif de pédale de frein, le dispositif de pédale (3) comportant au moins une pédale (5) mobile et au moins deux capteurs (6, 7) pour détecter un actionnement de la pédale (5), une force d'actionnement (F) étant détectée par l'un des capteurs (7) et une course d'actionnement (x) de la pédale (5) étant détectée par un autre des capteurs (6), une demande du conducteur étant déterminée en fonction d'un signal de sortie d'au moins l'un des capteurs (6, 7), les signaux de sortie des deux capteurs (6, 7) étant comparés l'un à l'autre afin de détecter un dysfonctionnement du dispositif de pédale (5) et, si un dysfonctionnement est détecté, le véhicule étant amené dans un état de sécurité, **caractérisé en ce que**, après que l'état de sécurité a été atteint, une instruction pour effectuer un test fonctionnel du dispositif de pédale (3) est délivrée à un conducteur du véhicule, le conducteur étant invité à appuyer sur la pédale (5) aussi fermement et aussi loin que possible.

2. Procédé selon la revendication 1, **caractérisé en ce que**, pour détecter le dysfonctionnement, le signal de sortie respectif d'un capteur (6, 7) est comparé à au moins une courbe caractéristique de consigne.

3. Procédé selon l'une des revendications précédentes, **caractérisé en ce qu'**une mesure de sécurité active un fonctionnement d'urgence du dispositif de pédale (5).

4. Procédé selon l'une des revendications précédentes, **caractérisé en ce que**, pour l'état de sécurité, le véhicule est mis à l'arrêt ou le dispositif de pédale est commuté dans un mode de fonctionnement à vide.

5. Procédé selon l'une des revendications précédentes, **caractérisé en ce que** les signaux de sortie des capteurs (6, 7) sont comparés à des signaux de sortie attendus pendant le test fonctionnel afin de déterminer un capteur (6, 7) défectueux.

6. Procédé selon la revendication 5, **caractérisé en ce que**, après détection d'un capteur (6, 7) défectueux, le capteur (7, 6) non défectueux est sélectionné pour la détermination de la demande du conducteur et l'état de sécurité du véhicule est supprimé.

7. Programme d'ordinateur conçu pour mettre en œuvre, lorsqu'il est exécuté par un ordinateur, un procédé selon l'une des revendications 1 à 6.

8. Produit de programme d'ordinateur comportant un support lisible par ordinateur sur lequel est stocké un programme d'ordinateur présentant les caractéristiques de la revendication 7.

9. Dispositif pour faire fonctionner un véhicule équipé d'un dispositif de pédale (3), d'un calculateur (8) spécialement conçu pour mettre en œuvre un procédé selon l'une des revendications 1 à 6 ou le programme d'ordinateur présentant les caractéristiques de la revendication 7.
